# EUROPEAN PATENT SPECIFICATION

(11) **EP 0 496 380 B1**
(45) Date of publication and mention of the grant of the patent: **10.11.1999**
(21) Application number: 92101019.5
(22) Date of filing: 22.01.1992
(51) Int. Cl.: G06F 9/44

(54) **Method for storing relationships in object-oriented computing systems**
Verfahren zur Speicherung von Relationen in einem objektorientierten Rechnersystem
Procédé pour stocker des rélations dans un système d'ordinateur orienté objet

(30) Priority: 23.01.1991 US 644945
(43) Date of publication of application: 29.07.1992
(73) Proprietor: Hewlett-Packard Company, Palo Alto, California 94304 (US)
(72) Inventor: Kosarchyn, Marta Maria, Santa Clara, California 95051 (US); Klemba, Keith Stuart, Santa Clara, California 95051 (US); Kincl, Norman, Campbell, California 95008 (US)
(74) Representative: Baillie, Iain Cameron

(56) References cited:
- SIGPLAN NOTICES vol. 22, no. 12, 1987, pages 466 - 481 J.RUMBAUGH 'Relations as Semantic Constructs in an Object-Oriented Language'
- COMPUTER COMMUNICATIONS vol. 12, no. 3, June 1989, LONDON GB pages 147 - 157 J.R.NICOL ET AL. 'Cosmos : an Architecture for a Distributed Programming Environment'
- PATENT ABSTRACTS OF JAPAN vol. 12, no. 8 (P-654)24 July 1987 & JP-A-62 168 267 ( HITACHI LTD )
- IEEE WORKSHOP ON VISUAL LANGUAGES 4 October 1990, SKOKIE pages 48 - 53 G.ROGERS 'The GRClass Visual Programming System'

## Description

### Field of the Invention

The present invention relates to computer systems, and more particularly to methods for storing and manipulating relationships among different objects in object-oriented computer systems.

### Background of the Invention

Early computer systems were designed for repetitive data processing tasks in which a relatively small number of operations were applied to a large volume of data. The problem to be programmed was typically divided into data and programs for processing the data. This organization was useful for early hardware designs, because early computers often stored data in different forms of memory than the code for processing the data. For example, the data was often stored on punched cards while the code for processing the data was stored in the magnetic memory of the central processing unit.

While this early form of coding overcame many of the problems inherent in the early computer architectures, it was far from optimum in the more general problems encountered in non-data processing areas. In particular, the division between program and data did not efficiently model many problems in which the code was more memory intensive than the data in question.

To deal with the more complex nature of modern computing problems, so called object-oriented compilers have been developed. In object-oriented programming, constructs consisting of data and code are created from prototypes which are referred to as "objects". Each "instance" of an object behaves as if it were a small computer having the data assigned to that instance of the object and a set of programs for operating on the data in question. The solution of a particular problem may involve thousands of instances of objects.

To improve storage efficiency and improve the logical construction of the system, objects having common properties are organized into tree like structures, the object at the root node having a property common to all of the objects. Each successive level of the tree is composed of objects having all of the properties of the objects between them and the root node plus some additional property. This type of relationship is often referred to as inheritance.

With the exception of instances of objects that are related by inheritance, object-oriented systems do not provide any uniform method for dealing with relationships between instances of objects. Consider a system for modeling a large computer network which includes various workstations, printers and other peripherals, and hubs for distributing work to the devices connected thereto. In an object-oriented computing system, the network would be modeled by creating one instance of an object for each of the physical parts of the system. For example, there would be one instance of a workstation object for each workstation, one instance of a printer object for each printer, one instance of a modem object for each modem, and so on. For the model to be complete, information about the relationships between the devices must be included in the system.

While object-oriented code is well suited for storing information related to the devices in the example, it is poorly suited to handling non-inheritance type relationships between the devices. In prior art object-oriented systems, this information is typically handled by including data in each object specifying that objects' relationships to other objects. This approach has a number of problems. First, there is no single location that can be searched to find all instances of objects that are connected by a particular relationship. To find all of the printers attached to a particular hub, the program would have to search the data in all instances of printer objects to determine if the instance in question was attached to the hub in question. To carry out this search, all of the objects in the program must have some common form of storage for connectivity data. Such common storage for objects representing widely different devices with widely differing levels of connectivity is difficult to design.

Second, even when such common storage may be defined, the storage system is usually peculiar to the specific application. As a result, different storage systems must be defined for each new system. The need to create a task specific storage system for managing and storing relationship data can significantly increase the cost of programming a system.

Third, once the relationship data is defined for each object, it is difficult to change in response to the introduction of an unanticipated relationship after the system has been programmed. Consider the case in which a new relationship is introduced between some subset of the devices. For example, assume that data specifying the maintenance person responsible for the device is to be stored. If no space is provided in the object definition for this information, the definitions for all of the objects will need to be changed and the maintenance data entered into the new space in each instance of each object. This can result in a need to rewrite a substantial portion of the computer code.

The document : SIGPLAN NOTICES, vol. 22, no. 12, 1987, pages 466-481; J. RUMBAUGH: "Relations as semantic constructs in an object-oriented language" is of interest. It teaches a semantic construct in an object-oriented language, wherein instances are related by one or more relationships.

Broadly, it is an object of the present invention to provide an improved method for storing and manipulating data specifying relationships in object-oriented computer systems.

It is a further object of the present invention to provide an object-oriented system that includes an efficient method for storing information about the relationships between instances of objects.

It is yet another object of the present invention to provide a method for storing and manipulating relationship data that provides a single data structure for detecting all instances of objects that are related in some predetermined manner.

It is a still further object of the present invention to provide a method for managing relationships that can be standardized across a number of applications.

These and other objects of the present invention will become apparent to those skilled in the art from the following detailed description of the invention and the accompanying drawings.

### Brief Description of the Drawings

Figure 1 illustrates a simple computer network.

Figure 2 illustrates the manner in which the network shown in Figure 1 could be modeled in an object-oriented computer system.

Figure 3 illustrates a relationship between the instances of the objects used to model the network shown in Figure 1.

Figure 4 illustrates the manner in which the present invention utilizes a binary matrix to store relationships.

### Summary of the Invention

The present invention is defined by the appended set of claims.

### Detailed Description of the Invention.

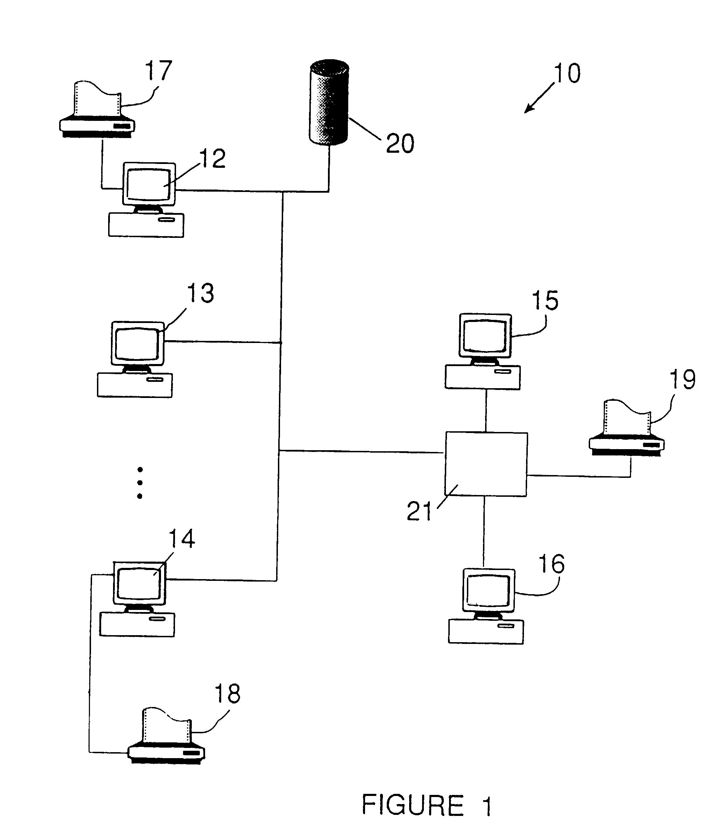

The present invention avoids the problems of the prior art solutions discussed above by defining a separate object for storing relationships between instances of other objects. The manner in which the present invention operates may be more easily understood with reference to a simple program for simulating a local area network such as that shown in Figure 1 at 10. Local area network 10 includes file server 20, a number of workstations of which workstations 12-16 are typical, and printers of which printers 17-19 are typical. It will also be assumed that a service person is assigned to each component of local area network 10.

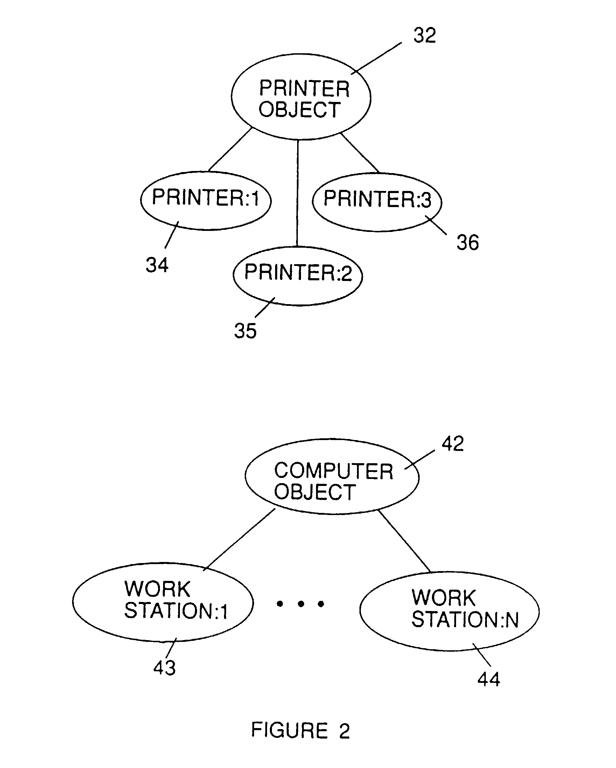

Local area network 10 may be modeled in an object-oriented programming language by defining objects representing work stations, servers, and printers. Such objects are shown in Figure 2. Each component of local area network 10 is an instance of an object of the appropriate type. For example, a printer object 32 is used to define three instances of printers 34-36. For the purposes of this discussion, an instance of an object will be distinguished from the object by appending a ":N" to its name, where N is a number which distinguishes the instance of the object in question from other instances of the same object. Similarly, the two instances of workstations are shown at 43 and 44. These are defined with reference to a computer object 42.

Each instance of an object may be viewed as comprising both data and computer code that operates on that data. The data and the code are connected to each other in object-oriented computer languages. The object itself is merely the prototype used in constructing each instance.

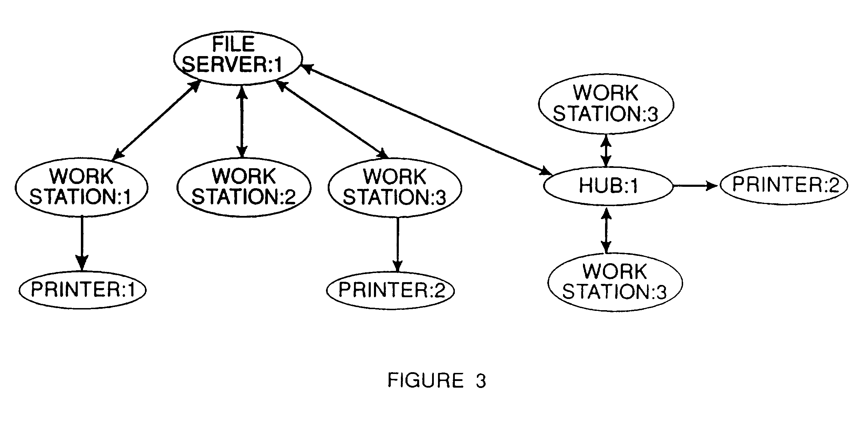

As noted above, object-oriented programming provides an efficient method for defining the various instances of the objects; however, it is poorly suited for tracking for relationships between the objects. For example, consider the various connections in local area network 10. A relationship "is connected to" may be defined to describe the connections. For the purposes of this discussion, the connections will be those over which data passes. The connections between the various instances of the objects in local area network 10 are shown in figure 3. Each connection is shown by a connecting line having an arrow head in the direction in which data may flow. It will be apparent from this figure that the number and direction of connection may vary widely among the instances of the various objects in local area network 10.

This variability leads to inefficient storage utilization if the information is stored with each instance of each object. Each instance would need sufficient storage to store the largest list of connections that is anticipated for local area network 10. Only a small fraction of the instances will have this maximum number of connections. Hence, a significant amount of storage space will be wasted. In addition, if the programmer makes an error in setting the size of the list, all of the object definitions will have to be altered at some later time when a connection is added to an instance of an object which already had a filled list of connections.

It should be noted that in most practical problems, a number of relationships among the instances of the objects must be tracked. Hence, if this prior art approach is utilized, a separate list must be kept for each type of relationship. Each list must be sufficient to store the relationships in the worse case. In addition, if the system is altered such that a new relationship must be tracked, all of the objects must be reprogrammed to insert the lists for the new relationship.

Finally, this prior art approach is very inefficient in locating all instances which are related by a particular relationship. To find all instances of objects that are related by a particular relationship, the list in each instance of each object in the system must be searched. This type of search is very inefficient in the typical prior art object-oriented programming languages.

To simplify the following discussion, two classes of objects will be defined. The first class will be referred to as "data objects". In the above example, instances of these objects would be used to store information about each device. For example, this class of objects would include objects for printers, hubs, and workstations. One instance of the printer object would be defined for each printer in the network, and so on. Data objects as defined here are the same as objects in object-oriented systems.

The second class of objects will be referred to as relationship objects. Each instance of an object of this class is used to store information specifying which instances of data objects are connected by a specified relationship. In the example discussed above, an instance of a relationship object would be utilized to store the information on specifying which devices are connected to other devices in the network. If more than one relationship is to be tracked, a separate instance of the relationship object would be used to track each additional relationship, for example, A second instance of a relationship object would be used to store information specifying which instances of data objects are assigned to a specified service person. Each instance of a relationship object stores information about precisely one relationship among the instances of the other objects in the system.

The scheme of the present invention overcomes the problems discussed above with reference to the prior art approaches to storing relationships among the various instances of objects. To find all instances of objects that are related in a specified manner, the program need only search the list of relationship objects for the instance used to store the specified relationship. Once this instance is found, the information stored in that instance is searched for the specified objects. If a new relationship is to be tracked, the programmer need only define an instance of the relationship object corresponding to the new relationship. The remaining object definitions need not be altered.

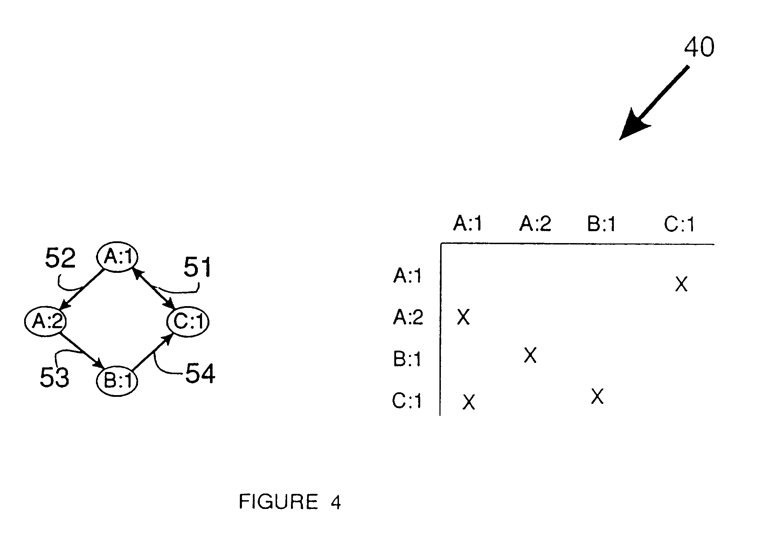

In the preferred embodiment of the present invention, the relationship object includes a binary matrix which is used for storing the relationships. Figure 4 illustrates the use of an binary matrix 40 to represent a particular relationship between four instances of objects. The four instances in question consist of two instances of an object A, labeled A:1 and A:2, one instance of an object B, labeled B:1, and one instance of an object C, labeled C:1. The relationship in question is irrelevant in determining the form of the adjacency matrix. However, to simplify the following discussion, the relationship " can send data to" will be used as an example. The directionality of the relationship between each pair of instances is indicated by the arrows shown at 51-54. In terms of the exemplary relationship, each arrow indicates the direction in which data can flow between the instances connected thereby. The relationship between A:1 and C:1 is bi-directional, as indicated by the double headed arrow 51. Hence, A:1 can both send and receive data from C:1. In contrast, C:1 can only receive data from B:1.

Binary matrix 40 includes one column and one row for each instance having the relationship in question. The columns and rows are labeled with the instance in question. Each of the entries in the binary matrix comprises a single bit. If a first instance can send data to a second instance, the entry in the column of the first instance at the row of the second instance is set to a one. Otherwise, the value is set to zero. For values that are set to ones are indicated by an "x" in Figure 4.

Binary matrices are preferred because such matrices may be interpreted as adjacency matrices in graph theory. The results of extensive theoretical and practical research into the manipulation of such matrices are available in forms that can be rapidly converted into object-oriented computer code. Hence, the present invention provides a uniform system for handling relationship data which can draw on the extensive optimization work developed from graph theory. A detailed description of the manner in which adjacency matrices are stored and manipulated may be found in **Systems Analysis and Management: Structure, Strategy, and Design,** Donald V. Steward, Petrocelli Books, Inc, 1981.

The present invention also provides a convenient method for storing precedence relationships among the instances of the objects related by a specific relationship. Such information may be stored by storing a number defining the precedence relationship for each row, or each column, of the binary matrix.

While the preferred embodiment of the present invention utilizes binary matrices for storing information specifying the identity of instances of objects related by a specified relationship, it will be apparent to those skilled in the art that a conventional table or matrix may be used for this purpose. A conventional matrix has a number other than a single bit at the intersection of each column and row. This number can used to store other information about the manner in which the two instances are related by the relationship in question. For example, embodiments in which the number could be used to store the "strength" of the relationship will be apparent to those skilled in the art. Alternatively, a pointer to an area in which additional information about the manner in which the two instances in question are related by the relationship could be stored.

While the present invention has been described in terms of "data objects" and "relationship objects", it will be apparent to those skilled in the art that a relationship object may itself be a data object. That is, a relationship object that stored information specifying relationships among other instances of relationship objects may be defined within the teachings of the present invention. The above discussion merely divided the objects into these two classes for the sake of clarity.

Accordingly, an improved method for storing relationships in object-oriented computing systems has been described. Various modifications will be apparent to those skilled in the art from the preceding description and drawings. Hence, the scope of the present invention is to be limited solely by the following claims.

## Claims

1. A method of operating a digital computer system wherein programs comprise data objects and wherein instances of said data objects are related by one or more relationships, characterized by:
causing said computer system to store information in said computer system specifying an instance of a relationship object comprising data specifying the identity of all said instances of said data objects that are related by a specified one of said relationships.

2. The method of Claim 1 wherein said information specifying said instance of said relationship object comprises information specifying a matrix.

3. The method of Claim 2 wherein said matrix is a binary matrix.

4. The method of Claim 1 wherein said information specifying said instance of said relationship object comprises information specifying a table.

5. A compiler for use in a digital computer to compile programs having data objects (A,B,C) defined therein, each said object comprising data and code operating on said data, wherein instances (1,2,3) of said objects are related by one or more relationships (51,52,53,54), said compiler including means for storing information specifying said relations comprising:
means for defining one or more data objects;
means for defining at least two instances of said data objects, said instances being related by a predetermined relationship;
means for defining a relationship object; and
means for defining an instance of said relationship object comprising data specifying the relationship between all instances of said data objects related by said predetermined relationship.

6. The compiler of Claim 5 wherein said instance of said relationship object comprises a matrix.

7. The compiler of Claim 6 wherein said matrix is a binary matrix (40).

8. The compiler of Claim 5 wherein said instance of said relationship object comprises a table.

## Patentansprüche

1. Ein Verfahren zum Betreiben eines digitalen Computersystems, bei dem die Programme Datenobjekte aufweisen und bei dem Fälle der Datenobjekte durch eine oder mehrere Beziehungen verwandt sind, gekennzeichnet durch folgende Schritte:
Bewirken, daß das Computersystem Informationen in dem Computersystem speichert, die einen Fall eines Beziehungsobjekts spezifizieren, das Daten aufweist, die die Identität von allen Fällen der Datenobjekte spezifizieren, die durch eine spezifizierte Beziehung der Beziehungen verwandt sind.

2. Das Verfahren gemäß Anspruch 1, bei dem die Informationen, die den Fall des Beziehungsobjekts spezifizieren, Informationen aufweisen, die eine Matrix spezifizieren.

3. Das Verfahren gemäß Anspruch 2, bei dem die Matrix eine binäre Matrix ist.

4. Das Verfahren gemäß Anspruch 1 bei dem die Informationen, die den Fall des Beziehungsobjekts spezifizieren, Informationen aufweisen, die eine Tabelle spezifizieren.

5. Ein Kompilierer zur Verwendung in einem digitalen Computer, um Programme zu kompilieren, die Datenobjekte (A, B, C) aufweisen, die in denselben definiert sind, wobei jedes Objekt Daten und Code, der auf die Daten wirkt, aufweist, und wobei Fälle (1, 2, 3) der Objekte durch eine oder mehrere Beziehungen (51, 52, 53, 54) verwandt sind, wobei der Kompilierer eine Einrichtung zum speichern von Informationen, die die Beziehungen spezifizieren, aufweist, die folgende Merkmale aufweist:
eine Einrichtung zum Definieren von einem oder mehreren Datenobjekten;
eine Einrichtung zum Definieren von mindestens zwei Fällen der Datenobjekte, wobei die Fälle durch eine vorbestimmte Beziehung verwandt sind;
eine Einrichtung zum Definieren eines Beziehungsobjekts; und
eine Einrichtung zum Definieren eines Falls des Beziehungsobjekts, das Daten aufweist, die die Beziehung zwischen allen Fällen der Datenobjekte, die durch die vorbestimmte Beziehung verwandt sind, spezifizieren.

6. Der Kompilierer gemäß Anspruch 5, bei dem der Fall des Beziehungsobjekts eine Matrix aufweist.

7. Der Kompilierer gemäß Anspruch 6, bei dem die Matrix eine binäre Matrix (40) ist.

8. Der Kompilierer gemäß Anspruch 5, bei dem der Fall des Beziehungsobjekts eine Tabelle aufweist.

## Revendications

1. Procédé de fonctionnement d'un système d'ordinateur numérique dans lequel des programmes comprennent des objets données et dans lequel des instances desdits objets données sont liées par une ou plusieurs relations, caractérisé par :
le fait de faire stocker par ledit système d'ordinateur des informations dans ledit système d'ordinateur spécifiant une instance d'un objet relation comprenant des données spécifiant l'identité de l'ensemble desdites instances desdits objets données qui sont liés par une relation spécifiée desdites relations.

2. Procédé selon la revendication 1, dans lequel lesdites informations spécifiant ladite instance dudit objet relation comprennent des informations spécifiant une matrice.

3. Procédé selon la revendication 2, dans lequel ladite matrice est une matrice binaire.

4. Procédé selon la revendication 1, dans lequel lesdites informations spécifiant ladite instance dudit objet relation comprennent des informations spécifiant une table.

5. Compilateur destiné à être utilisé dans un système d'ordinateur pour compiler des programmes comportant des objets données (A, B, C) définis dans ceux-ci, chaque dit objet comprenant des données et un code opérant sur lesdites données, dans lequel des instances (1, 2, 3) dudit objet sont liées par une ou plusieurs relations (51, 52, 53, 54) ledit compilateur comportant des moyens pour stocker des informations spécifiant lesdites relations comprenant :
des moyens pour définir un ou plusieurs objets données ;
des moyens pour définir au moins deux instances dudit objet données, lesdites instances étant liées par une relation prédéterminée ;
des moyens pour définir un objet relation ; et
des moyens pour définir une instance dudit objet relation comprenant des données spécifiant la relation entre toutes les instances desdits objets données liées par ladite relation prédéterminée.

6. Compilateur selon la revendication 5, dans lequel ladite instance dudit objet relation comprend une matrice.

7. Compilateur selon la revendication 6, dans lequel ladite matrice est une matrice binaire (40).

8. Compilateur selon la revendication 5, dans lequel ladite instance dudit objet relation comprend une table.
